Europäisches Patentamt

(19) European Patent Office

Office européen des brevets

(11) Veröffentlichungsnummer: **0 137 865**
**A1**

(12) # EUROPÄISCHE PATENTANMELDUNG

(21) Anmeldenummer: 83110314.8

(22) Anmeldetag: 15.10.83

(51) Int. Cl.⁴: **H 04 B 7/26**, H 04 Q 7/04

(43) Veröffentlichungstag der Anmeldung: **24.04.85**
**Patentblatt 85/17**

(84) Benannte Vertragsstaaten: **DE FR GB IT SE**

(71) Anmelder: **ANT Nachrichtentechnik GmbH,**
**Gerberstrasse 33, D-7150 Backnang (DE)**

(72) Erfinder: **Pfeiffer, Theodor, Dr. Ing., Kelterweg 46,**
**D-7012 Fellbach (DE)**
Erfinder: **Sperlich, Josef, Dipl.-Ing., Kelterweg 52,**
**D-7150 Backnang (DE)**

(74) Vertreter: **Wiechmann, Manfred, Dipl.-Ing., ANT**
**Nachrichtentechnik GmbH Gerberstrasse 33,**
**D-7150 Backnang (DE)**

(54) **Verfahren zum Aufbau einer Funkverbindung.**

(57) Die Erfindung betrifft ein Verfahren zum Aufbau einer Funkverbindung zwischen einem ortsfesten, an ein Fernsprechnetz angeschlossenen Teilnehmer (T1) und einem mit einer Sende-Empfangs-Einrichtung ausgestatteten mobilen Teilnehmer (T2). Dabei wird eine vom ortsfesten Teilnehmer abgegebene Suchmeldung zu einem Satelliten (SAT) übertragen, der diese Suchmeldung auf ein vorgegebenes Gebiet der Erde zurückstrahlt. Diese Suchmeldung enthält die Rufnummer des gesuchten mobilen Teilnehmers und die Rufnummer des rückzurufenden Teilnehmers (T1) oder die Kennzahl einer Funküberleitzentrale (FÜZ), mit der der ortsfeste Teilnehmer (T1) verbunden ist, und die Leitungsnummer der zwischen der Funküberleitzentrale und dem ortsfesten Teilnehmer bestehenden Verbindung.

## Verfahren zum Aufbau einer Funkverbindung

Die vorliegende Erfindung betrifft ein Verfahren zum Aufbau einer Funkverbindung zwischen einem ortsfesten, an ein Fernsprechnetz angeschlossenen Teilnehmer und einem mit einer Sende-Empfangs-Einrichtung ausgestatteten mobilen Teilnehmer, wobei der ortsfeste Teilnehmer eine an das Fernsprechnetz angeschlossene Funküberleitzentrale anwählt und seine Suchmeldung unter Angabe der Rufnummer des mobilen Teilnehmers abgibt und dann die Suchmeldung ausgesendet wird.

Für den Fall, daß die Verbindung zwischen dem ortsfesten Teilnehmer und der Funküberleitzentrale nach der Durchgabe der Suchmeldung zunächst unterbrochen wird und der ortsfeste Teilnehmer den Rückruf des gesuchten mobilen Teilnehmers abwartet, wird, wenn von der Sende-Empfangs-Einrichtung des gesuchten Teilnehmers ihre eigene Rufnummer identifiziert worden ist, eine Verbindung von der Sende-Empfangs-Einrichtung zu der vom ortsfesten Teilnehmer angewählten Funküberleitzentrale hergestellt und von dort zum ortsfesten Teilnehmer durchgeschaltet.

Falls nach der Durchwahl des ortsfesten Teilnehmers die Verbindung zur Funküberleitzentrale nicht unterbrochen wird, wird die Suchmeldung einschließlich der Kennzahl der angewählten Funküberleitzentrale ausgesendet und von der Sende-Empfangs-Einrichtung des gesuchten Teilnehmers wird, wenn sie ihre eigene Rufnummer in der Suchmeldung identifiziert hat, die Kennzahl der mit dem ortsfesten Teilnehmer verbundenen Funküberleitzentrale ausgesendet und eine Verbindung mit dieser Funküberleitzentrale hergestellt.

Ein derartiges Verfahren ist aus der DE-OS 2 228 327 bekannt. Dabei ist das gesamte Gebiet, das für den Aufenthalt des mobilen Teilnehmers in Frage kommt, in mehrere Funkverkehrsbereiche, zu denen jeweils eine ortsfeste Funkstelle gehört, aufgeteilt. Um nun einen mobilen Teilnehmer, dessen augenblicklicher Standort dem ortsfesten Teilnehmer nicht bekannt ist, erreichen zu können, müssen die Funkstellen sämtlicher Funkbereiche
angewählt werden und jede Funkstelle muß ein Suchsignal für den
mobilen Teilnehmer abgeben.

Der Erfindung liegt nun die Aufgabe zugrunde, ein Verfahren der
eingangs genannten Art anzugeben, das den Einsatz vieler Funkbereiche und die damit verbundene aufwendige Suchprozedur nach
dem mobilen Teilnehmer umgeht.

Diese Aufgabe wird, wenn nach Abgabe der Suchmeldung die Verbindung zwischen dem ortsfesten Teilnehmer und der Funküberleitzentrale zunächst unterbrochen wird bis der mobile Teilnehmer
zurückruft, durch die Merkmale im Kennzeichen des Anspruchs 1,
und wenn keine Unterbrechung der Verbindung erfolgt, durch die
kennzeichnenden Merkmale des Anspruchs 2 gelöst.

Zweckmäßige Ausführungen der Erfindung gehen aus den Unteransprüchen hervor.

Der Einsatz eines Satelliten ermöglicht es, nur mit einem einzigen Funkverkehrsbereich auszukommen, da er das Signal für
den mobilen Teilnehmer über ein sehr großes Gebiet auf der
Erde flächendeckend ausstrahlen kann. Da erfindungsgemäß nur
noch ein Funkverkehrsbereich vorhanden ist, ergibt sich vorteilhafterweise eine Ersparnis an Funkfrequenzbändern, von denen sonst jedem der vielen Funkverkehrsbereiche für die Ausstrahlung der Suchmeldungen ein eigenes zugeordnet werden
müßte.

Anhand von in der Zeichnung dargestellten Ausführungsbeispielen wird nun die Erfindung näher erläutert. Es zeigen:

Fig. 1 ein System zum Aufbau einer Funkverbindung mit nur
einer Erdefunkstelle,

Fig. 2 ein System mit mehreren Erdefunkstellen und

Fig. 3 einen Rahmenaufbau von Suchmeldungen.

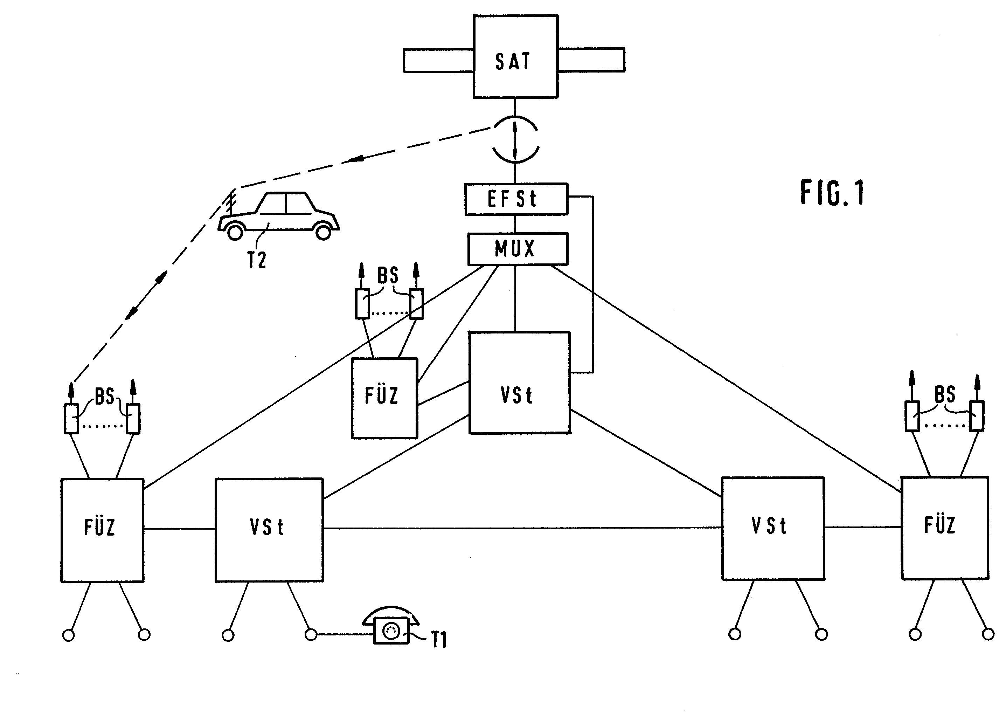

Ein System zum Aufbau einer Funkverbindung zwischen einem ortsfesten Teilnehmer T1, der an eine der Vermittelungsstellen VSt
eines Fernsprechnetzes angeschlossen ist, und einem mobilen,
mit einer Sende-Empfangs-Einrichtung ausgestatteten Teilnehmer
stellt die Fig. 1 dar. Bei diesem System sind die Vermittelungsstellen mit Funküberleitzentralen FÜZ verbunden, die ihrerseits
an eine Multiplexeinrichtung MUX angeschlossen sind. Die Multiplexeinrichtung gibt seine Signale über eine Erdfunkstelle EFSt
an einem Satelliten SAT ab.

Nachfolgend werden nun Verfahren beschrieben, nach denen z.B.
mit dem in Fig. 1 gezeigten System eine Funkverbindung zwischen
dem ortsfesten Teilnehmer T1 und dem mobilen Teilnehmer T2 aufgebaut werden kann.

Der ortsfeste Teilnehmer T1 wählt zunächst die Kennzahl der
Funküberleitzentrale, bei der der gesuchte mobile Teilnehmer
T2 registriert ist und anschließend die Rufnummer des mobilen
Teilnehmers. Sobald die Verbindung vom ortsfesten Teilnehmer
zu der angewählten Funküberleitzentrale hergestellt ist, erhält er die Aufforderung, die Rufnummer anzugeben, die der
mobile Teilnehmer zurückrufen soll. In der Regel wird das die
Rufnummer des rufenden ortsfesten Teilnehmers selbst oder aber
auch irgend eines anderen Teilnehmers sein. Nachdem die Rufnummer in der Funküberleitzentrale FÜZ eingegangen ist, erhält
der rufenden ortsfeste Teilnehmer die Aufforderung, bei seinem
Telefonapparat den Hörer aufzulegen und den Rückruf des gesuchten mobilen Teilnehmers abzuwarten.

Jede der Funküberleitzentralen FÜZ ordnet die bei ihr eingegangenen, von ortsfesten Teilnehmern abgegebenen Suchmeldungen, die, wie oben gesagt, die Rufnummer des gesuchten Teilnehmers und die Rufnummer des zurückzurufenden Teilnehmers
enthalten, in eine Ruffolgeliste ein und übermittelt die Suchmeldungen der Reihe nach an die Multiplexeinrichtung MUX.
Die Multiplexeinrichtung faßt die Suchmeldungen zu einem Bitstrom zusammen und leitet diesen an die Erdfunkstelle EFSt
weiter, von wo aus er zum Satelliten ausgesendet und von diesem in einem geeigneten Frequenzband und auf ein vorgegebenes
Ausleuchtgebiet auf der Erde wieder abgestrahlt wird.

Wenn die Sende-Empfangs-Einrichtung des gesuchten mobilen Teilnehmers T2 in den vom Satelliten ausgesendeten Suchmeldungen
ihre eigene Rufnummer identifiziert, speichert sie die sich
an die eigene Rufnummer anschließende Rufnummer des rückzurufenden Teilnehmers ab. Nach Empfang der Rufnummern sendet
die Sende-Empfangs-Einrichtung des mobilen Teilnehmers automatisch die Rufnummer des rückzurufenden Teilnehmers an die
Basisfunkstation BS mit dem besten Empfangspegel der nächstgelegenen Funküberleitzentrale FÜZ aus. Mit dieser Funküberleitzentrale, welche schließlich die Verbindung gemäß der
Rufnummer über das Fernsprechnetz zu dem suchenden ortsfesten
Teilnehmer herstellt, bleibt der mobile Teilnehmer auch dann
verbunden, wenn er in den Empfangsbereich einer anderen Funküberleitzentrale überwechselt. Sind mehrere Funküberleitzentralen an dem Aufbau der Funkverbindung beteiligt, so kann
der Datenaustausch zwischen ihnen über die Multiplexeinrichtung MUX oder gar über den Satelliten SAT erfolgen.

Soll - anders als beim oben geschilderten Verfahren - nach der
Abgabe der Suchmeldung an eine Funküberleitzentrale die Verbindung zwischen dem ortsfesten Teilnehmer und der Funküberleitzentrale nicht unterbrochen werden bis der gesuchte Teilnehmer sich zurückmeldet, so ist folgendes Verfahren für den
Aufbau einer Funkverbindung anzuwenden.

Der ortsfeste Teilnehmer wählt zunächst die Funküberleitzentrale an, bei der der mobile Teilnehmer registriert ist, unter Angabe der Rufnummer des gesuchten mobilen Teilnehmers.
Die Funküberleitzentrale übermittelt dann diese Suchmeldung,
ergänzt um die Kennzahl der Funküberleitzentrale und die
Leitungsnummer der wartenden Verbindung mit dem ortsfesten
Teilnehmer an die Multiplexeinrichtung MUX. Von hier aus
nimmt die Suchmeldung den oben schon beschriebenen Weg über
die Erdfunkstelle EFSt und den Satelliten SAT zu dem Ausleuchtgebiet auf der Erde, wo sich der mobile Teilnehmer befindet. Hat die Sende-Empfangs-Einrichtung des gesuchten mobilen Teilnehmers T2 die Suchmeldung mit seiner Rufnummer,
der Kennzahl der mit dem ortsfesten Teilnehmer in Verbindung
stehenden Funküberleitzentrale und der Leitungsnummer der
Verbindung empfangen, so sendet sie automatisch die Kennzahl
und die Leitungsnummer an die den besten Empfangspegel aufweisende Basisfunkstation BS der nächstgelegenen Funküberleitzentrale aus. Nachdem zu der mit dem suchenden ortsfesten
Teilnehmer verbundenen Funküberleitzentrale FÜZ durchgeschaltet worden ist, wird unter besonderer Kennzeichnung die Leitungsnummer der wartenden Verbindung übermittelt, so daß
schließlich auf die Leitung des ortsfesten Teilnehmers geschaltet werden kann. Die Kennzeichnung der Leitungsnummer
dient zur Unterscheidung von einer Wählziffernfolge, die von
einem mobilen Teilnehmer abgegeben wird, wenn von ihm aus
eine Funkverbindung zu einem anderen Teilnehmer initiiert
wird.

Um sicher zu gehen, daß der gesuchte mobile Teilnehmer auch
die Suchmeldung erhält, sollte vom Satelliten mehrmals in
kurzen zeitlichen Abständen ausgesendet werden.

Statt die Verkehrsabwicklung der Fernüberleitzentralen mit
dem Satelliten SAT über eine Multiplexeinrichtung MUX, wie
Fig. 1 zeigt, laufen zu lassen, können dafür auch gemäß dem

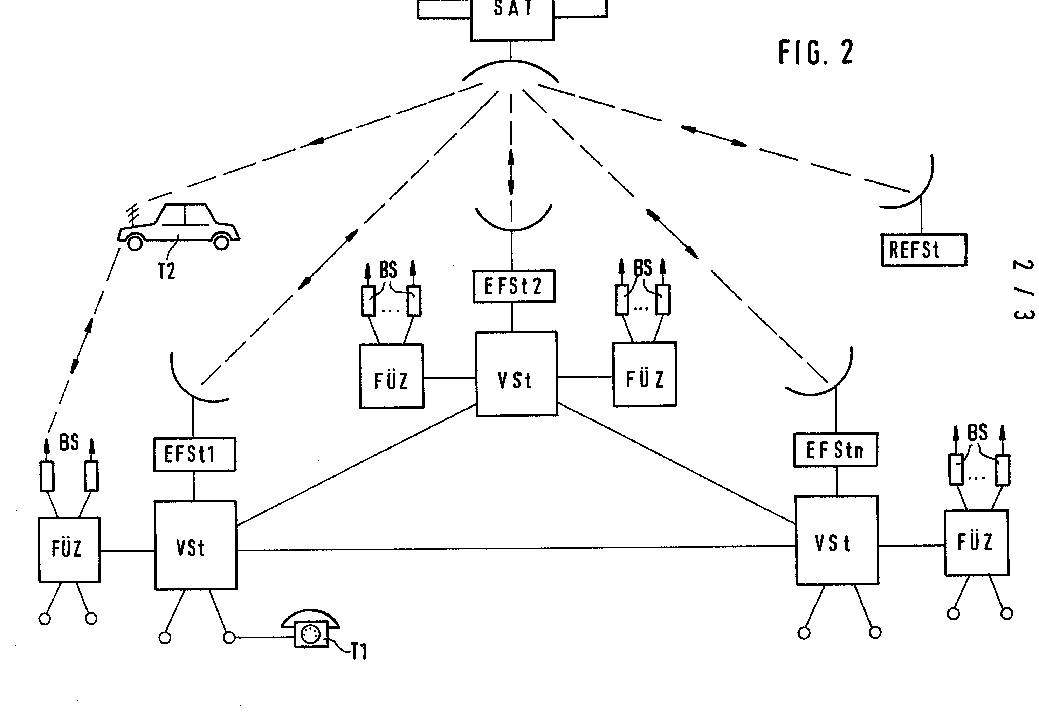

in Fig. 2 dargestellten System mehrere im Zeitmultiplex
mit Vielfachzugriff (TDMA) betriebene Erdefunkstellen EFSt1 ...
EFStn eingesetzt werden.

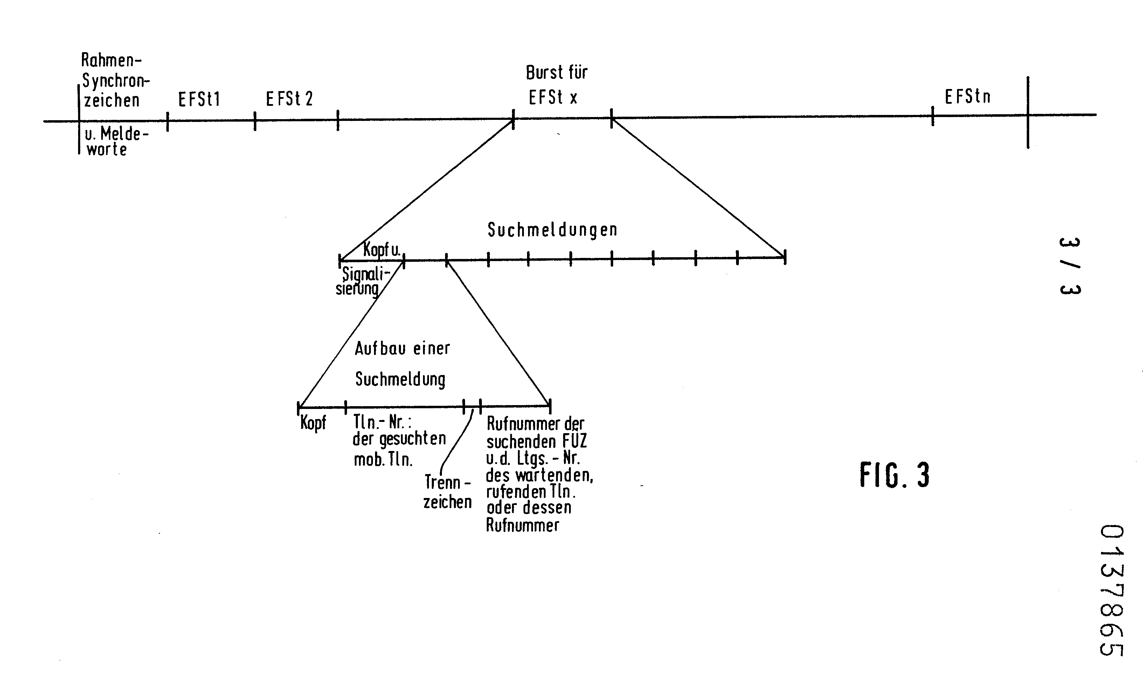

Die Fig. 3 zeigt für den TDMA-Betrieb einen möglichen Rahmenaufbau der von den Erdefunkstellen EFSt 1 ... EFStn ausgesendeten Suchmeldungen in Form von Impulsbündeln (Burst genannt).

Der Rahmen beginnt mit einem Rahmensynchronzeichen und Meldewort, das von einer Referenzerdefunkstelle REFSt (vgl. Fig. 2)
gesendet wird. Diese Referenzerdefunkstelle REFSt ist für die
Synchronisierung des gesamten Systems, für die Zuteilung an
Übertragungskapazität der einzelnen Erdefunkstellen und die
Verwaltung und Betriebsführung des Systems zuständig. Die
Referenzerdefunkstelle benutzt das Rahmensynchronzeichen, um
Befehle und Informationen an die Erdefunkstelle zu übertragen,
die zu diesem Zweck auch die gesamten Rahmen empfangen. Dem
Rahmensynchronzeichen und Meldewort folgen die einzelnen
Bursts der Erdefunkstellen EFSt1 ... EFStn. Jeder Burst beginnt dabei wiederum mit einem Kopf- und Signalisier-Informationsblock. Er ist mit an die Referenzerdefunkstelle
REFSt zu übertragenden Informationen versehen. Diese Informationen enthalten Angaben über den Betriebszustand der
Erdefunkstellen und Meldungen über den Übertragungskapazitätsbedarf, d.h., ob die Erdefunkstellen im Burst Kapazität für
mehr oder weniger Suchmeldungen zugeteilt erhalten sollen.
Die Suchmeldungen selbst enthalten neben einigen Kopfbits
zur Abgrenzung von der vorangegangenen Suchmeldung jeweils
die Rufnummer des gesuchten Teilnehmers und, über ein Trennwort abgesetzt, die Kennzahl der suchenden Funküberleitzentrale und die Leitungsnummer des wartenden, rufenden Teilnehmers oder dessen Rufnummer.

Anstelle des oben angesprochenen ortsfesten Teilnehmers kann
selbstverständlich auch ein mobiler Teilnehmer treten, der
sich mit einem anderen mobilen Teilnehmer in Verbindung
setzen will. Der rufende, mobile Teilnehmer würde in diesem
Fall seine Suchmeldung an eine Funküberleitzentrale per
Funk übertragen. Von hier an würde dann der gleiche Prozeß für den Aufbau einer Funkverbindung mit dem gesuchten mobilen
Teilnehmer ablaufen wie bei einem suchenden ortsfesten Teilnehmer.

Bei Einsatz geeigneter Konferenzeinrichtungen wären auch
Konferenzschaltungen zwischen mehreren ortsfesten und mobilen
Teilnehmern möglich.

ANT Nachrichtentechnik GmbH         E7/Th/ht
Gerberstraße 33                     BK 83/114
D-7150  Backnang


Patentansprüche


1. Verfahren zum Aufbau einer Funkverbindung zwischen einem
ortsfesten, an ein Fernsprechnetz angeschlossenen Teilnehmer und einem mit einer Sende-Empfangs-Einrichtung ausgestatteten mobilen Teilnehmer, wobei der ortsfeste Teilnehmer eine an das Fernsprechnetz angeschlossene Funküberleitzentrale anwählt und seine Suchmeldung unter Angabe der Rufnummer des mobilen Teilnehmers abgibt, dann
die Suchmeldung ausgesendet wird und, wenn von der Sende-
Empfangs-Einrichtung des gesuchten Teilnehmers ihre eigene
Rufnummer identifiziert worden ist, eine Verbindung von
der Sende-Empfangs-Einrichtung zu der vom ortsfesten Teilnehmer angewählten Funküberleitzentrale hergestellt und
von dort zum ortsfesten Teilnehmer durchgeschaltet wird,
dadurch gekennzeichnet, daß der ortsfeste Teilnehmer
(T1) seine eigene Rufnummer der an die Funküberleitzentrale (FÜZ) abgegebenen Suchmeldung hinzufügt, daß die
Suchmeldung darauf über eine Erdfunkstelle (EFSt) zu
einem Satelliten (SAT) übertragen wird, der die Suchmeldung auf ein vorgegebenes Gebiet der Erde abstrahlt,
und daß nach dem Empfang der eigenen Rufnummer und der des ortsfesten Teilnehmers (T1) die Sende-Empfangs-Einrichtung des mobilen Teilnehmers (T2) die Rufnummer des ortsfesten Teilnehmers zu einer Funküberleitzentrale (FÜZ) aussendet, um über diese Rufnummer die Verbindung mit dem ortsfesten Teilnehmer (T1) aufzunehmen.

2. Verfahren zum Aufbau einer Funkverbindung zwischen einem ortsfesten, an ein Fernsprechnetz angeschlossenen Teilnehmer und einem mit einer Sende-Empfangs-Einrichtung ausgestatteten mobilen Teilnehmer, wobei der ortsfeste Teilnehmer eine an das Fernsprechnetz angeschlossene Funküberleitzentrale anwählt und seine Suchmeldung unter Angabe der Rufnummer des mobilen Teilnehmers abgibt, dann die Suchmeldung einschließlich der Kennzahl der angewählten Funküberleitzentrale ausgesendet wird und von der Sende-Empfangs-Einrichtung des gesuchten Teilnehmers, wenn sie ihre eigene Rufnummer in der Suchmeldung identifiziert hat, die Kennzahl der mit dem ortsfesten Teilnehmer verbundenen Funküberleitzentrale ausgesendet und eine Verbindung mit dieser Funküberleitzentrale hergestellt wird, dadurch gekennzeichnet, daß von der mit dem ortsfesten Teilnehmer (T1) in Verbindung stehenden Funküberleitzentrale (FÜZ) der Suchmeldung die Leitungsnummer dieser Verbindung hinzugefügt wird, daß die Suchmeldung darauf über eine Erdfunkstelle zu einem Satelliten übertragen wird, der die Suchmeldung auf ein vorgegebenes Gebiet der Erde abstrahlt, und daß die Sende-Empfangs-Einrichtung des mobilen Teilnehmers (T2) nach Empfang der Suchmeldung auch die Leitungsnummer aussendet, damit in der Funküberleitzentrale (FÜZ) anhand dieser Leitungsnummer auf die mit dem ortsfesten Teilnehmer (T1) verbundene Leitung durchgeschaltet werden kann.

3. Verfahren nach den Ansprüchen 1 oder 2, dadurch gekennzeichnet, daß bei Vorliegen mehrerer Suchmeldungen diese im Multiplexbetrieb zum Satelliten (SAT) übertragen werden.

4. Verfahren nach den Ansprüchen 1 oder 2, <u>dadurch gekenn-</u>
   <u>zeichnet</u>, daß die Suchmeldung vom Satelliten (SAT) mehrmals in kurzen zeitlichen Abständen ausgesendet wird.

5. Verfahren nach den Ansprüchen 1 oder 2, <u>dadurch gekennzeich-</u>
   <u>net</u>, daß der mobile Teilnehmer (T2) seine Signale an die
   ihm nächstliegende Funküberleitzentrale (FÜZ) aussendet,
   von der aus dann eine Verbindung zu der vom ortsfesten
   Teilnehmer (T1) angewählten Funküberleitzentrale (FÜZ)
   hergestellt wird.

6. Verfahren nach Anspruch 5, <u>dadurch gekennzeichnet</u>, daß die
   Verbindung zwischen mehreren Funküberleitzentralen (FÜZ)
   über eine Multiplexeinrichtung (MUX), an die die Funküberleitzentralen angeschlossen sind, hergestellt wird.

7. Verfahren nach Anspruch 5, <u>dadurch gekennzeichnet</u>, daß die
   Verbindung zwischen mehreren Funküberleitzentralen (FÜZ)
   über den Satelliten (SAT) hergestellt wird.

FIG.1

SAT

EFSt

MUX

VSt

FÜZ

VSt

FÜZ

VSt

FÜZ

BS

BS

BS

T1

T2

1 / 3

0137865

0137865

FIG. 2

Rahmen-Synchron-zeichen u. Meldeworte

EFSt1  EFSt 2

Burst für
EFSt x

EFStn

Suchmeldungen

Kopf u. Signali-sierung

Aufbau einer Suchmeldung

Kopf  Tln.- Nr.: der gesuchten mob. Tln.  Rufnummer der suchenden FÜZ u.d. Ltgs.- Nr. des wartenden, rufenden Tln. oder dessen Rufnummer

Trenn-zeichen

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 056 349 (TEKADE) <br> * Seite 2, Zeile 16 - Seite 4, Zeile 8; Seite 5, Zeile 30 - Seite 8, Zeile 25; Figur * | 1 | H 04 B 7/26 <br> H 04 Q 7/04 |
| A | | 5 | |
| | --- | | |
| Y,D | DE-A-2 228 327 (TEKADE) <br> * Seite 3, Zeile 35 - Seite 6, Zeile 12 * | 2 | |
| | --- | | |
| Y | DE-A-1 925 054 (TEKADE) <br> * Seite 4, Zeilen 1-13; Figur 1 * | 1,2 | |
| | --- | | |
| Y | THE NATIONAL TELESYSTEMS CONFERENCE, Galveston, Texas, 7.-10. November 1982, Konferenzbericht, Abschnitt B1.3, Seiten B1.3.1 - B.1.3.5, IEEE, New York, USA <br> R.R. LOVELL et al.: "An experiment to enable commercial mobile satellite service" * Seite B1.3.3, Absatz 3.1 "Experiment configuration"; Figur 3 * | 1,2 | RECHERCHIERTE SACHGEBIETE (Int. Cl. ³) <br><br> H 04 B <br> H 04 Q |
| | ---     -/- | | |

Der vorliegende Recherchenbericht wurde für alle Patentansprüche erstellt.

| Recherchenort | Abschlußdatum der Recherche | Prüfer |
|---|---|---|
| DEN HAAG | 24-05-1984 | GULDNER H.D. |

Europäisches
Patentamt

**EUROPÄISCHER RECHERCHENBERICHT**

0137865

Nummer der Anmeldung

EP 83 11 0314

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | PROCEEDINGS OF THE NATIONAL ELECTRONIC CONFERENCE, Band 33, 29.-31. Oktober 1979, Seiten 432-437, Oak Brook, USA R.E. ANDERSON et al.: "Satellite-aided mobile telephone system" * Seite 435, Abschnitt "Configuration" * | 1,2,5 | |
| A | US-A-4 337 376 (GRUENBERG) * Spalte 5, Zeile 54 - Spalte 6, Zeile 46; Figur 1 * | 1,2,7 | |
| A | NTZ NACHRICHTENTECHNISCHE ZEITSCHRIFT, Band 36, Nr. 2, Februar 1983, Seiten 86-89, Berlin, DE. H. HÄBERLE et al.: "Entwicklungslinien der Satellitenübertragungsnetze" * Seite 86, mittlere Spalte, Zeilen 3-8 von unten; Seite 86, rechte Spalte, Zeilen 14-17 von unten; Seite 87, rechte Spalte, Zeilen 2-13 von unten * | 1-3,7 | RECHERCHIERTE SACHGEBIETE (Int. Cl. ³) |

--- -/-

Der vorliegende Recherchenbericht wurde für alle Patentansprüche erstellt.

| Recherchenort | Abschlußdatum der Recherche | Prüfer |
|---|---|---|
| DEN HAAG | 24-05-1984 | GULDNER H.D. |

Europäisches
Patentamt

EUROPÄISCHER RECHERCHENBERICHT

0137865

Nummer der Anmeldung

EP  83 11 0314

## EINSCHLÄGIGE DOKUMENTE

Seite 3

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DATA COMMUNICATIONS, Band 12, Nr. 1, Januar 1983, Seiten 97-103, New York, USA D.B. PARKER: "Satellite micro earth stations - a small investment with big returns" * Seite 97, rechte Spalte, Zeilen 1-3 von unten; Seite 98, linke Spalte, Zeilen 19-23 von unten; Seite 98, Bild 1 * | 1-3 | |
| | --- | | |
| A | DE-A-2 536 452  (LICENTIA) * Seite 16, Zeilen 5-17; | 6 | |
| | --- | | |
| A | US-A-4 178 476  (FROST) *  Seite  1,  Zusammenfassung, rechte Spalte, Zeilen 17-28 * | 8 | |
| | ----- | | |

RECHERCHIERTE
SACHGEBIETE (Int. Cl. ³)

Der vorliegende Recherchenbericht wurde für alle Patentansprüche erstellt.

| Recherchenort DEN HAAG | Abschlußdatum der Recherche 24-05-1984 | Prüfer GULDNER H.D. |
|---|---|---|